# EUROPÄISCHE PATENTANMELDUNG

(11) **EP 4 311 632 A1**
(43) Veröffentlichungstag der Anmeldung: **31.01.2024**
(21) Anmeldenummer: 22187161.9
(22) Anmeldetag: 27.07.2022
(51) Int. Cl.: B25J 9/16

(54) **VERFAHREN ZUM GREIFEN EINES OBJEKTS, COMPUTERPROGRAMM UND ELEKTRONISCH LESBARER DATENTRÄGER**

(71) Anmelder: Siemens Aktiengesellschaft, 80333 München (DE)
(72) Erfinder: PANTANO, Matteo, 81737 München (DE); REGULIN, Daniel, 82269 Geltendorf (DE); YANG, Qiaoyue, 86199 Augsburg (DE); KLASS, Vladislav, 80805 München (DE)
(74) Vertreter: Siemens Patent Attorneys

(57) **Zusammenfassung**

Die Erfindung betrifft ein Verfahren zum Greifen eines Objekts (10) durch eine Robotereinrichtung, welche wenigstens zwei unterschiedlich ausgebildete Greifelemente umfasst. Ferner betrifft die Erfindung eine Computerprogramm und einen Datenträger.

## Beschreibung

Die Erfindung betrifft ein Verfahren zum Greifen eines Objekts durch eine Robotereinrichtung gemäß dem Patentanspruch 1. Ferner betrifft die Erfindung ein Computerprogramm gemäß dem Patentanspruch 9 sowie einen elektronisch lesbaren Datenträger gemäß dem Patentanspruch 10.

Einem Roboter beziehungsweise einer Robotereinrichtung, welche beispielsweise in einer Fertigungsanlage eingesetzt werden soll, ist häufig zum Greifen von Objekten ausgebildet. Der Robotereinrichtung beizubringen, wie das Objekt beziehungsweise das Bauteil anzufassen und zu transportieren ist, ist eine besonders technische Herausforderung.

Dabei lässt sich das Problem aus menschlicher Sicht leicht beschreiben: Wenn das Objekt beziehungsweise ein Bauteil auf einem Tisch liegt, weiß der Mensch genau, wie er das Bauteil erreichen und wie und wohin er es mit der Geschicklichkeit seiner Hände bewegen kann.

Heutzutage gibt es Lösungen, bei welchen mittels einer 3D-Kamera und einem Computer über eine grafische Benutzeroberfläche der Roboter beziehungsweise Robotergreifer programmiert werden kann, wobei mittels eines CAD-Modells die Festlegungen des zu greifenden Teils und schließlich die Festlegung der Greifposition mithilfe eines mausgeführten Zeigers ermöglicht wird. Dazu ist ein Roboterexperte erforderlich, der die grafische Benutzeroberfläche bedient. Dies kann zeitaufwendig sein.

Demgegenüber gibt es Forschungsanwendungen, bei welchen der Roboterprogrammierer die Greifposition nicht angeben braucht und mittels maschinellen Lernens eine gute Position für das Greifen bestimmt wird. Dabei ist ein Nachteil, dass dabei Spezifikationen, welche in einem industriellen Szenario erforderlich sind, nicht berücksichtigt werden.

Daher ist es Aufgabe der Erfindung, ein Verfahren zum Greifen eines Objekts mit einer Robotereinrichtung, ein Computerprogramm sowie einen Datenträger bereitzustellen, durch welche das Greifen des Objekts besonders vorteilhaft durch die Robotereinrichtung ermöglicht werden kann und dabei gleichzeitig Anforderungen, wie sie in Produktionsumgebungen herrschen, eingehalten werden können.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Greifen eines Objekts durch eine Robotereinrichtung. Das erfindungsgemäße Verfahren zum Greifen des Objekts durch die Robotereinrichtung, welche wenigstens zwei unterschiedlich ausgebildete Greifelemente umfasst und das jeweilige der Greifelemente zum Greifen des Objekts ausgebildet ist, umfasst mehrere Schritte.

In einem ersten Schritt erfolgt ein Erfassen des Objekts anhand wenigstens einer durch eine Kamera erstellten Aufnahme in einem Erfassungsbereich der Robotereinrichtung. In einem zweiten Schritt erfolgt ein Erfassen wenigstens eines Greifbereichs an dem Objekt durch eine Sensoreinheit, deren Position relativ zur Kamera bekannt ist. In einem dritten Schritt erfolgt ein Lokalisieren des wenigstens einen Greifbereichs in der Aufnahme und/oder in einem Modell des Objekts. In einem vierten Schritt erfolgt ein Ermitteln einer jeweiligen Erfolgswahrscheinlichkeit für das Greifen des Objekts mittels des jeweiligen Greifelements. In einem fünften Schritt erfolgt ein Bestimmen des wenigstens einen Greifbereichs in einem Objektkoordinatensystem. In einem sechsten Schritt erfolgt ein Ablegen des bestimmten Greifbereichs, den ermittelten Erfolgswahrscheinlichkeiten und einer Objektkennung, durch welche das Objekt identifizierbar ist, in einer Datenbank.

Bei der Robotereinrichtung kann es sich beispielsweise um einen Greifroboter beziehungsweise Roboterarm in einer Produktionsumgebung, in welcher das Objekt bei der Produktion verwendet wird, handeln kann. Der Erfassungsbereich ist insbesondere ein Bereich, welcher von der Kamera einsehbar und ferner durch die Greifelemente der Robotereinrichtung zu erreichen ist. Dass die wenigstens zwei Greifelemente unterschiedlich ausgebildet sind, bedeutet, dass das jeweilige Greifelement beispielsweise ein eigenes Prinzip zum Greifen des Objekts verwendet. So kann eines der wenigstens zwei Greifelemente das Objekt beispielsweise mittels Magnet greifen, ein weiteres der Greifelemente kann beispielsweise das Objekt mittels eines Vakuumsaugnapfes greifen. So kann je nach Art des Objektes mal das eine und mal das andere Greifelement vorteilhaft zum Greifen sein, sodass die Robotereinrichtung eine Robotereinrichtung ist, welche insbesondere zum Greifen mehrerer unterschiedlicher Objekte ausgebildet ist.

Mit anderen Worten wird bei dem erfindungsgemäßen Verfahren zunächst das Objekt an einer Stelle, dem Erfassungsbereich, platziert, an dem es für die Kamera, welche insbesondere eine 2D- oder eine 3D-Kamera sein kann und somit insbesondere Farbinformationen und/oder Tiefeninformationen erfassen kann, sichtbar ist, um wenigstens eine Aufnahme zu machen. Im zweiten Schritt wird ein Sensor, dessen Position in Bezug auf die Kamera bekannt ist, verwendet, um einen lokalen Bereich zu identifizieren, in dem das Greifen an dem Objekt möglich sein könnte. Dieser lokale Bereich wird insbesondere unter Berücksichtigung der industriellen Anforderung identifiziert. Drittens wird der identifizierte lokale Bereich, der Greifbereich, in ein Kamerakoordinatensystem und/oder in ein Werkstückkoordinatensystem beziehungsweise in das Objektkoordinatensystem transformiert, wodurch der lokale Bereich in einem Bild beziehungsweise der Aufnahme und/oder in einem insbesondere dreidimensionalen Modell identifiziert werden kann. Im vierten Schritt wird der lokale Bereich beziehungsweise der Greifbereich insbesondere mehreren neuronalen Netzen zugeführt, die jeweils die Wahrscheinlichkeit des Greiferfolgs für verschiedene Greifer beziehungsweise jeweils ein Greifelement ausgeben. So sagt beispielsweise das neuronale Netz 1 den Greiferfolg eines Zweifingerbackengreifers voraus, das neuronale Netz 2 sagt den Greiferfolg eines Vakuumgreifers voraus und so weiter. Die Wahrscheinlichkeiten beziehungsweise Erfolgswahrscheinlichkeiten für den Greiferfolg werden dann insbesondere miteinander verglichen und der Greifpunkt mit dem höchsten Erfolg wird ausgewählt. Dabei können beim Erfassen des Greifbereichs mehrere Greifbereiche erfasst werden, beispielsweise eine glatte Fläche für einen Vakuumgreifer und eine Öse für den Zweifingerbackengreifers. Mehrere Greifbereiche können ebenfalls durch das erfindungsgemäße Verfahren miteinander verglichen werden. Im fünften Schritt wird der Greifpunkt aus dem lokalen Bereich in das Werkstücckoordinatensystem transformiert. Schließlich wird im sechsten Schritt der Greifpunkt im Werkstückkoordinatensystem zusammen mit einer Werkstückkennung und einer Kennung für den besten Greifer in einer Datenbank gespeichert. Dabei handelt es sich bei dem Objekt beispielsweise um ein Werkstück.

Sollte der Fall eintreten, dass für zwei oder mehr der Greifelemente die Erfolgswahrscheinlichkeiten zum Greifen des Objekts gleich sind, kann eine Steuerungseinrichtung eine Information an einen Benutzer ausgegeben und diesen beispielsweise zur Auswahl auffordern.

Dabei liegt der Erfindung die Erkenntnis zugrunde, dass es in der Industrie immer noch ein großes Problem ist, Robotern beizubringen, wie Bauteile anzufassen sind. Mit aufkommender künstlicher Intelligenz könnte gegen diese Probleme angegangen werden. Wie bereits einleitend erwähnt, ist es aus der menschlichen Perspektive nicht schwierig, ein Bauteil beziehungsweise ein Objekt anzufassen.

Aufgrund der Komplexität einer menschlichen Hand, sind Nachbauten für Produktionsprozesse noch nicht in Serie. Daher verwenden Robotereinrichtungen in der Regel mehrere unterschiedlich ausgebildete Greifelemente, beispielsweise Zweifingerbackengreifer, Vakuumgreifer und/oder Sauggreifer. Dabei zu beachten, dass eine Kenntnis der Greifposition beziehungsweise des Greifbereichs stark vom Greifer und/oder dem Objekttypen und/oder der Bauteil- beziehungsweise Objektkonstruktion - beispielsweise glatte Oberflächen, gekerbter Struktur und so weiter - abhängig ist.

Bei dem erfindungsgemäßen Verfahren kann das Erfassen eines Greifbereichs durch die Sensoreinheit beispielsweise besonders einfach erfolgen, da als solche ein Gerät verwendet werden kann, dessen Position in einem dreidimensionalen Koordinatensystem bekannt ist. Mit diesem kann der Greifbereich beispielsweise von einem Benutzer der Robotereinrichtung, welcher nicht extra als Roboterexperte ausgebildet sein braucht, einfach durch eine Nutzerinteraktion markiert werden. Für das Ermitteln der jeweiligen Erfolgswahrscheinlichkeit beziehungsweise der Wahrscheinlichkeit des Erfolgs für das Greifen wird insbesondere ein neuronales Netz verwendet, um zu entscheiden, welcher Greifer für welchen Greifbereiche besonders vorteilhaft verwendet werden kann. So kann mittels des erfindungsgemäßen Verfahrens die Robotereinrichtung besonders vorteilhaft auch von Nichtexperten verwendet werden, um Greifpositionen einzulernen.

Dabei kann der beste Greifpunkt besonders einfach beispielsweise über eine API aufgrund der erstellten Datenbank exportiert werden, sodass unterschiedlichste beziehungsweise mehrere Robotereinrichtungen das Objekt vorteilhaft greifen können. Daten aus der Datenbank können somit über eine einfache API für andere Systeme abgefragt werden. Die API kann ein Objekt-CAD, den Greifpunkt (in Bezug auf den Mittelpunkt/Schwerpunkt des Objekts) und auch andere Eigenschaften, die während des Scannens beziehungsweise dem Durchführen des Verfahrens erhalten wurden, exportieren.

In vorteilhafter Ausgestaltung der Erfindung wird das Greifen des Objekts mit dem Greifelement durchgeführt, für welches die größte Erfolgswahrscheinlichkeit ermittelt ist, wobei die größte Erfolgswahrscheinlichkeit insbesondere durch einen Abruf aus der Datenbank bekannt ist. Mit anderen Worten wird das für den jeweiligen Greifbereich die Erfolgswahrscheinlichkeit für ein Greifen des jeweiligen Greifelements herangezogen, sodass es von der Robotereinrichtung beispielsweise für die Produktion weiterverarbeitet beziehungsweise weitergegeben werden kann. Dadurch ergibt sich der Vorteil, dass das Objekt besonders vorteilhaft mittels des Verfahrens gegriffen werden kann.

In weiterer vorteilhafter Ausgestaltung der Erfindung erfolgt das jeweilige Ermitteln der jeweiligen Erfolgswahrscheinlichkeit für das jeweilige Greifelement durch maschinelles Lernen beziehungsweise Methoden des maschinellen Lernens, insbesondere wird ein jeweiliges neuronales Netz verwendet. Mit anderen Worten wird das jeweilige Ermitteln durch ein jeweiliges eigenes neuronales Netz durchgeführt. So ist das jeweilige Netz beispielsweise mittels Trainingsdaten auf die Eigenschaften des jeweiligen Greifelements trainiert. Dadurch ergibt sich der Vorteil, dass auf besonders vorteilhafte Weise die jeweilige Erfolgswahrscheinlichkeit bestimmt werden kann, sodass ein besonders objektiver Vergleich der unterschiedlich ausgebildeten Greifelemente für das Greifen möglich ist.

In weiterer vorteilhafter Ausgestaltung der Erfindung wird das Modell als CAD-Modell, also insbesondere als dreidimensional rechnergestützt konstruiertes Computermodell, bereitgestellt. Zusätzlich oder alternativ wird aus wenigstens zwei der erstellten Aufnahmen, insbesondere wenn beim Erfassen des Objekts somit mehr als die wenigstens eine Aufnahme durch die Kamera erstellt wird, mittels Photogrammmetrie das Modell erzeugt. Mit anderen Worten wird für das Modell auf bereits für die Konstruktion des Objekts vorhandene CAD-Daten zugegriffen. Zusätzlich oder alternativ wird mittels Bildmessung aus Fotografien des Objekts seine Lage und/oder Form indirekt bestimmt und beispielsweise mittels Computervision eine dreidimensionale Rekonstruktion durchgeführt, sodass das Modell erhalten werden kann. Dadurch ergibt sich der Vorteil, dass auf besonders einfache Weise während der Durchführung des Verfahrens auf ein Modell des Objekts zurückgegriffen werden kann.

In weiterer vorteilhafter Ausgestaltung der Erfindung wird beim Lokalisieren des Greifbereichs dieser in ein Kamerakoordinatensystem und/oder in das Objektkoordinatensystem beziehungsweise ein Werkstückkoordinatensystem transformiert. Mit anderen Worten wird während des dritten Schritts des Verfahrens beim Lokalisieren des Greifbereichs ein Abgleich durchgeführt, bei welchem der Greifbereich im Kamerakoordinatensystem und/oder im Objektkoordinatensystem markiert wird. So können direkt nach oder beim Bestimmen beziehungsweise Erfassen des Greifbereichs Informationen über diesen zur Weiterverarbeitung besonders vorteilhaft gespeichert werden. Dadurch ergibt sich der Vorteil, dass das Verfahren besonders effizient durchgeführt werden kann.

In weiterer vorteilhafter Ausgestaltung der Erfindung wird für die Auswahl des Greifelements zum Greifen des Objekts dessen Lage, insbesondere im Erfassungsbereich der Robotereinrichtung, berücksichtigt. Mit anderen Worten wird die Lage, also insbesondere die Position und vorteilhafterweise zusätzlich die Orientierung des Objekts im Arbeitsbereich des Roboters berücksichtigt. So kann es sein, dass beispielsweise die Greifelemente unterschiedlich flexibel in dem Erfassungsbereich positioniert werden können, sodass beispielsweise eine Greifposition durch ein Greifelement nicht erreichbar ist, dieses aber vorteilhaft aufgrund seiner Erfolgswahrscheinlichkeit zu greifen wäre. So kann nun beispielsweise ein weiteres der wenigstens zwei Greifelemente, welches den Greifbereich oder einen weiteren Greifbereich anfahren kann, verwendet werden, obwohl dessen Erfolgswahrscheinlichkeit niedriger bestimmt worden ist. Dadurch ergibt sich der Vorteil, dass die Robotereinrichtung besonders vorteilhaft zum Greifen des Objekts verwendet werden kann.

In weiterer vorteilhafter Ausgestaltung der Erfindung werden als eines der Greifelemente ein Zweifingerbackengreifer, ein Vakuumgreifer und/oder ein Sauggreifer verwendet. Mit anderen Worten kann das Greifelement unterschiedliche Prinzipien zum Greifen verwenden, beispielsweise in der Art des Greifens einer Zange, durch Einsaugen und/oder durch Ansaugen. Dabei ist die Aufzählung hier keinesfalls als abschließend zu betrachten, sondern weitere Greifer beziehungsweise Greifprinzipien, wie Magneten und/oder elektrische Felder und so weiter, sind denkbar. Dadurch ergibt sich der Vorteil, dass das Verfahren besonders vorteilhaft zum Greifen des Objekts genutzt werden kann.

In weiterer vorteilhafter Ausgestaltung der Erfindung werden als die Sensoreinheit die Kamera und/oder eine weitere Kamera, ein Lagestift und/oder ein Scanner und/oder ein Laserpointer und/oder ein Messtaster verwendet. Mit anderen Worten kann die Sensoreinheit beziehungsweise der Sensor der Sensoreinheit auf verschiedensten Messprinzipen beruhen, wobei beispielsweise für eine besondere Kosteneffizienz die Sensoreinheit die Kamera sein kann. Zusätzlich oder alternativ kann die Sensoreinheit ein Lagestift und/oder ein insbesondere als Laserscanner ausgebildeter Scanner, welcher beispielsweise auch als 3D-Scanner ausgebildet sein kann, oder ein einfaches Zeigegerät, wie ein Laserpointer, sein. So kann beispielsweise mittels eines Laserpointers von einem Benutzer der Greifbereich ausgewählt und durch die Kamera erfasst werden. Bei einer besonders einfachen Ausgestaltung ist möglich, dass beispielsweise durch Erfassen einer Hand mittels des Scanners und/oder der Kamera und/oder der weiteren Kamera der Greifbereich markiert und somit identifiziert und erfasst werden kann. Der Lagestift umfasst beispielsweise Sensoren, welche seine Position und Lage im Raum erkennen kann. Ferner ist seine Spitze insbesondere drucksensitiv, sodass mittels des Lagestifts einfach an den Greifbereich gedrückt werden kann, um diesen zu erfassen. Dadurch ergibt sich der Vorteil, dass je nach Art des Objekts und/oder Eignung beispielsweise eines Werkers, welcher die Robotereinrichtung benutzt, auf besonders vorteilhafte Weise der wenigstens eine Greifbereich erfasst werden kann.

In weiterer vorteilhafter Ausgestaltung der Erfindung erfolgt das Erfassen des wenigstens einen Greifbereichs an dem Objekt durch die Sensoreinheit mittels eines Bedienelements und/oder wird ein Bestätigungssignal für eine Bestätigung einer Anzeigeeinrichtung ausgegeben und/oder in der Anzeigeeinrichtung wird wenigstens eine der Aufnahmen der Kamera angezeigt, in welcher der Greifbereichs markiert ist. Mit anderen Worten wird, um insbesondere zu bestätigen, dass der Punkt als Greifpunkt genommen werden soll, durch den Bediener beispielsweise kein Knopf auf der Sensoreinheit gedrückt, sondern er wird ein externes Bedienelements, wie beispielsweise ein Fußschalter, verwendet. Zusätzlich oder alternativ kann zum sich vergewissern, dass der Greifbereich gespeichert wird, ein insbesondere Live-Blick auf die Teile und den Punkt (durch die und/oder eine weitere am Roboter montierte Kamera) ermöglicht werden. So kann sowohl der aktuelle Punkt als auch die bereits gespeicherten Punkte angezeigt werden. Ferner kann jedes Mal, wenn der Bediener den Punkt beziehungsweise Greifbereich speichert, eine Rückmeldung ausgeben werden, beispielsweise visuell und/oder haptisch. Dadurch ergibt sich der Vorteil, dass das Verfahren besonders vorteilhaft zum Greifen des Objekts genutzt werden kann.

Ein zweiter Aspekt der Erfindung umfasst ein Computerprogramm. Das Computerprogramm kann beispielsweise in einem Speicher einer elektronischen Recheneinrichtung einer Robotereinrichtung geladen werden und umfasst Programmmittel, um die Schritte des Verfahrens auszuführen, wenn das Computerprogramm in der elektronischen Recheneinrichtung beziehungsweise einer Steuerungseinrichtung der Robotereinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm gemäß dem zweiten Aspekt der Erfindung umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Es zeigt:
- FIG 1: ein schematisches Ablaufdiagramm eines Verfahrens zum Greifen eines Objekts durch eine Robotereinrichtung; und
- FIG 2: ein weiteres schematisches Ablaufdiagramm des Verfahrens.

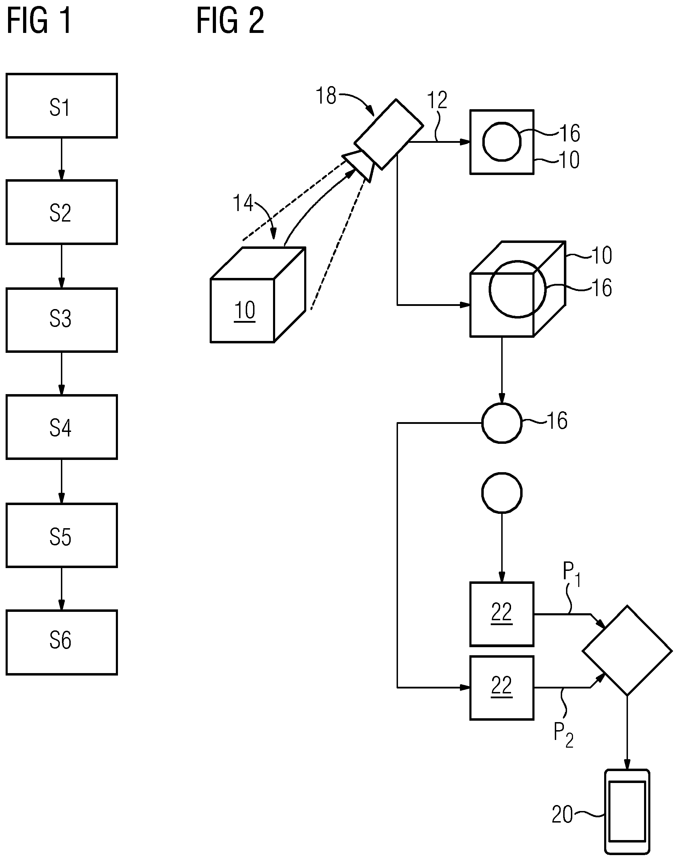

FIG 1 zeigt ein einfaches Ablaufdiagramm für ein Verfahren zum Greifen eines Objekts 10 durch eine Robotereinrichtung, welche wenigstens zwei unterschiedlich ausgebildete Greifelemente umfasst und das jeweilige Greifelement zum Greifen des Objekts ausgebildet ist. Dabei umfasst das gezeigte Verfahren mehrere Schritte:
In einem ersten Schritt S1 erfolgt das Erfassen des Objekts anhand wenigstens einer durch eine Kamera 12, welche insbesondere als RGB-Kamera und/oder Tiefenkamera ausgebildet ist, erstellten Aufnahme in einem Erfassungsbereich 14 der Robotereinrichtung.

In einem zweiten Schritt S2 erfolgt ein Erfassen, insbesondere durch Identifizieren und/oder Markieren, eines Greifbereichs 16 an dem Objekt 10 durch eine Sensoreinheit 18, deren Position, insbesondere Pose (Position und Orientierung), relativ zur Kamera 12 bekannt ist.

In einem dritten Schritt S3 erfolgt ein Lokalisieren des Greifbereichs 16 in der Aufnahme und/oder in einem Modell des Objekts 10.

In einem vierten Schritt S4 erfolgt ein Ermitteln einer jeweiligen Erfolgswahrscheinlichkeit für das Greifen mittels des jeweiligen Greifelements.

In einem fünften Schritt S5 erfolgt ein Bestimmen des wenigstens einen Greifbereichs in einem Objektkoordinatensystem.

Schließlich erfolgt in einem sechsten Schritt S6 ein Ablegen des bestimmten Kreisbereichs, der Erfolgswahrscheinlichkeiten und einer Objektkennung, welche zur Identifikation des Objekts 10 dient, in einer Datenbank 20.

FIG 2 zeigt ein weiteres schematisches Ablaufdiagramm des Verfahrens, wobei das Objekt 10 mittels der Kamera 12 in dem Erfassungsbereich 14 erfasst wird. Die durch die Kamera 12 erstellte Aufnahme kann insbesondere in einer Ausgestaltung der Kamera 12 ein Farbbild beziehungsweise RGB-Bild und/oder ein Bild, welches Tiefeninformationen enthält, umfassen und somit eine zwei- und/oder dreidimensionale Darstellung des Objekts 10 beinhalten.

Der Greifbereich 16 wird insbesondere durch eine Werkereingabe mittels der Sensoreinheit 18, welche im Beispiel als die Kamera 12 ausgebildet sein kann, ermöglicht. In der FIG 2 sind sowohl eine zweidimensionale Darstellung des Greifbereichs 16 in der Aufnahme als auch eine dreidimensionale Darstellung des Greifbereichs 16 in einem dreidimensionalen Modell des Objekts gezeigt, diese befinden sich in der FIG 2 rechts oben direkt untereinander. Im schematischen Ablaufdiagramm der FIG 2 wird für das Ermitteln der jeweiligen Erfolgswahrscheinlichkeiten, P1 und P2, jeweils ein neuronales Netz 22 für das jeweilige Greifelement verwendet. Die Erfolgswahrscheinlichkeiten P1, P2 werden verglichen, um zu bestimmen, welche Erfolgswahrscheinlichkeit zum Greifen des Objekts 10 die höhere ist und anschließend werden die Erfolgswahrscheinlichkeiten inklusive der Objektkennung, des bestimmten Greifbereichs, insbesondere mit seiner Lage im Objektkoordinatensystem, in der Datenbank 20 abgelegt.

Dabei ist es für das Verfahren vorteilhaft, wenn für das Greifen des Objekts 10 mit dem Greifelement insbesondere durch Abrufen der Datenbank, das Greifelement, für welches die größte Erfolgswahrscheinlichkeit ermittelt worden ist, verwendet wird. So kann beispielsweise in einem weiteren Schritt des Verfahrens das Greifen des Objekts 10 mit dem durch das Verfahren ermittelten Greifelement durchgeführt werden.

Für das jeweilige Ermitteln der jeweiligen Erfolgswahrscheinlichkeit wird auf Methoden des maschinellen Lernens zurückgegriffen. Insbesondere wird, wie bereits gezeigt, für das jeweilige Greifelement ein jeweiliges eigenes neuronales Netz 22 verwendet, sodass bei dem Verfahren wenigstens so viele neuronale Netze 22 verwendet werden, wie die Robotereinrichtung unterschiedlich ausgebildete Greifelemente aufweist. Dadurch kann das Verfahren besonders effizient durchgeführt werden. Besonders vorteilhaft ist es, wenn beim Lokalisieren des wenigstens einen Greifbereichs 16 dieser in ein Kamerakoordinatensystem der Kamera 12 und/oder in das Objektkoordinatensystem transformiert wird. So kann beispielsweise während das Modell aus mehreren Aufnahmen mittels Photogrammmetrie erzeugt wird, der Greifbereich 16 durch die Robotereinrichtung in seiner Pose ermittelt werden.

Dabei ist es ferner von Vorteil, dass aus wenigstens zwei der erstellten Aufnahmen der Kamera 12 mittels Photogrammetrie das Modell erzeugt wird. Zusätzlich oder alternativ kann als das Modell insbesondere ein CAD-Modell beziehungsweise ein dreidimensionales Modell des Objekts 10, welches beispielsweise für dessen Fertigung sowieso bekannt ist, verwendet werden.

Ferner ist es für das Verfahren von Vorteil, wenn für die Auswahl des Greifelements zum Greifen des Objekts 10 dessen Lage im Erfassungsbereich 14 berücksichtigt wird. Mit anderen Worten kann das Objekt beispielsweise aufgrund von Prozessbedingungen bei der Fertigung, bei welcher die Robotereinrichtung verwendet wird, jeweils in unterschiedlicher Lage, das heißt mit einer unterschiedlichen Position im Raum und einer unterschiedlichen Orientierung, abgelegt beziehungsweise in den Erfassungsbereich 14 eingebracht werden. Dadurch kann es sich ergeben, dass die generelle Information, welche durch das Ablegen der Greifpositionen in Kombination mit den Erfolgswahrscheinlichkeiten in der Datenbank 20 enthalten sind, anders zu interpretieren sind beziehungsweise durch eine elektronischer Recheneinrichtung beziehungsweise Steuerungseinrichtung der Robotereinrichtung interpretiert werden können. So kann beispielsweise aufgrund der Lage eine jeweilige Eigenschaft, beispielsweise der Beweglichkeit des jeweiligen Greifelements zusätzlich zu dessen Greifeigenschaft für die Erfolgswahrscheinlichkeit beitragen. Beispielsweise kann ein Sauggreifer an einem längeren Arm sein, als ein Zweifingerbackengreifer, sodass in einem Fall der Sauggreifer besser ist, wobei bei einer anderen Position des Objekts 10 der Zweifingerbackengreifer zu bevorzugen wäre.

Dabei hat es sich als vorteilhaft gezeigt, wenn die Robotereinrichtung beispielsweise eine große Menge unterschiedlicher Greifelemente aufweist, beispielsweise den Zweifingerbackengreifer, einen Vakuumgreifer und/oder einen Sauggreifer, wobei die Aufzählung nicht als abschließend zu betrachten ist. Und beispielsweise können zusätzlich Magnetgreifer oder dergleichen zum Einsatz kommen.

Die Sensoreinheit 18 kann insbesondere als die Kamera 12 und/oder eine weitere Kamera ausgebildet sein. Ferner kann für die beziehungsweise als die Sensoreinheit 18 zum Erfassen beziehungsweise Identifizieren und/oder Markieren des Greifbereichs 16 ein Lagestift und/oder Scanner oder ein Laserpointer und/oder ein Messtaster verwendet werden. Ferner kann vorteilhafterweise das Erfassen des wenigstens eines Greifbereichs 16 an dem Objekt 10 durch die Sensoreinheit 18 mittels eines Bedienelements erfolgen und/oder für eine Bestätigung ein Signal an einer Anzeigeeinrichtung ausgegeben werden und/oder in der Anzeigeeinrichtung wenigstens eine der Aufnahmen der Kamera angezeigt werden, in welcher der der Greifbereichs markiert ist.

Ein hier beschriebenes Verfahren kann auch in Form eines Computerprogramms vorliegen, dass das Verfahren auf der Steuerungseinrichtung beziehungsweise an der elektronischen Recheneinrichtung implementiert, welche beispielsweise als die Steuereinheit der Robotereinrichtung ausgeführt ist, wenn es auf dieser Steuereinrichtung ausgeführt wird. Ebenso kann ein elektronischer lesbarer Datenträger mit darauf gespeicherten elektronisch lesbaren Steuerinformationen vorliegen, welcher zumindest ein beschriebenes Computerprogramm umfasst und derart ausgestaltet ist, dass sie bei Verwenden des Datenträgers in der Steuereinheit der Robotereinrichtung ein beschriebenes Verfahren durchführen.

Durch das vorgestellte Verfahren, das Computerprogramm sowie den Datenträger ergeben sich die Vorteile, dass auf besonders vorteilhafte Weise der Greifpunkt beziehungsweise der Greifbereich in einem dreidimensionalen Koordinatensystem für die Robotereinrichtung bekannt ist. Durch Verwendung der neuronalen Netze kann auf vorteilhafte Weise entschieden werden, welcher des wenigstens einen Greifbereichs in Kombination mit den wenigstens zwei Greifelementen vorteilhaft verwendet werden kann. Durch das Ausbilden der Datenbank 20 kann auf besonders vorteilhafte Weise das Verfahren auf besonders viele Robotereinrichtungen bei einmaligem Anlernen angewandt werden. Darüber hinaus braucht es keinen Experten der Programmierung zur Benutzung des Verfahrens und somit der Robotereinrichtung.

### Bezugszeichenliste

- S1: erster Schritt
- S2: zweiter Schritt
- S3: dritter Schritt
- S4: vierter Schritt
- S5: fünfter Schritt
- S6: sechster Schritt
- 10: Objekt
- 12: Kamera
- 14: Erfassungsbereich
- 16: Greifbereich
- 18: Sensoreinheit
- 20: Datenbank
- 22: neuronales Netz

## Patentansprüche

1. Verfahren zum Greifen eines Objekts (10) durch eine Robotereinrichtung, welche wenigstens zwei unterschiedlich ausgebildete Greifelemente umfasst und das jeweilige der Greifelemente zum Greifen des Objekts (10) ausgebildet ist, mit den Schritten:
- Erfassen des Objekts (10) anhand wenigstens einer durch eine Kamera (12) erstellten Aufnahme in einem Erfassungsbereich (14) der Robotereinrichtung; (S1)
- Erfassen wenigstens eines Greifbereichs (16) an dem Objekt (10) durch eine Sensoreinheit (18), deren Position relativ zur Kamera (12) bekannt ist; (S2)
- Lokalisieren des wenigstens einen Greifbereichs (16) in der Aufnahme und/oder in einem Modell des Objekts (10); (S3)
- Ermitteln einer jeweiligen Erfolgswahrscheinlichkeit für das Greifen des Objekts (10) mittels des jeweiligen Greifelements; (S4)
- Bestimmen des wenigstens einen Greifbereichs (16) in einem Objektkoordinatensystem; (S5) und
- Ablegen des bestimmten Greifbereichs (16), den ermittelten Erfolgswahrscheinlichkeiten und einer Objektkennung in einer Datenbank (20). (S6)

2. Verfahren nach Anspruch 1, **dadurch gekennzeichnet, dass** das Greifen des Objekts (10) mit dem Greifelement, für welches die größte Erfolgswahrscheinlichkeit ermittelt ist anhand durchgeführt wird.

3. Verfahren nach Anspruch 1 oder 2, **dadurch gekennzeichnet, dass** das jeweilige Ermitteln der jeweiligen Erfolgswahrscheinlichkeit durch maschinelles Lernen, insbesondere durch ein jeweiliges neuronales Netz (22), durchgeführt wird.

4. Verfahren nach einem der vorhergehenden Ansprüche, **dadurch gekennzeichnet, dass** das Modell als CAD-Modell bereitgestellt wird und/oder aus wenigstens zwei der erstellten Aufnahmen mittels Photogrammetrie das Modell erzeugt wird.

5. Verfahren nach einem der vorhergehenden Ansprüche, **dadurch gekennzeichnet, dass** beim Lokalisieren des wenigstens einen Greifbereichs (16) dieser in ein Kamerakoordinatensystem und/oder in das Objektkoordinatensystem transformiert wird.

6. Verfahren nach einem der vorhergehenden Ansprüche, **dadurch gekennzeichnet, dass** für die Auswahl des Greifelements zum Greifen des Objekts (10) dessen Lage berücksichtigt wird.

7. Verfahren nach einem der vorhergehenden Ansprüche, **dadurch gekennzeichnet, dass** als Greifelements ein Zweifingerbackengreifer, ein Vakuumgreifer und/oder ein Sauggreifer verwendet wird.

8. Verfahren nach einem der vorhergehenden Ansprüche, **dadurch gekennzeichnet, dass** als die Sensoreinheit (18) die Kamera (12) und/oder eine weitere Kamera, ein Lagestift und/oder ein Scanner und/oder ein Laserpointer und/oder ein Messtaster verwendet wird.

9. Verfahren nach einem der vorhergehenden Ansprüche, **dadurch gekennzeichnet, dass** das Erfassen des wenigstens eines Greifbereichs (16) an dem Objekt (10) durch die Sensoreinheit (18) mittels eines Bedienelements erfolgt und/oder ein Bestätigungssignal an einer Anzeigeeinrichtung ausgegeben wird und/oder in der Anzeigeeinrichtung wenigstens eine der Aufnahmen der Kamera angezeigt wird, in welcher der Greifbereichs (16) markiert ist.

10. Computerprogramm, welches direkt in einen Speicher einer elektronischen Recheneinrichtung ladbar ist, mit Programmmitteln, um die Schritte des Verfahrens nach einem der Ansprüche 1 bis 9 auszuführen, wenn das Programm in der elektronischen Recheneinrichtung ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einer elektronischen Recheneinrichtung ein Verfahren nach einem der Ansprüche 1 bis 9 durchführen.
